(19) **Europäisches Patentamt European Patent Office Office européen des brevets**

(11) **EP 2 636 254 B1**

(12) **FASCICULE DE BREVET EUROPEEN**

(45) Date de publication et mention de la délivrance du brevet:
**01.10.2014 Bulletin 2014/40**

(51) Int Cl.:
*H04W 52/02* (2009.01)     *H04W 8/00* (2009.01)
*H04W 74/08* (2009.01)

(21) Numéro de dépôt: **11776189.0**

(22) Date de dépôt: **28.10.2011**

(86) Numéro de dépôt international:
**PCT/EP2011/069023**

(87) Numéro de publication internationale:
**WO 2012/059434 (10.05.2012 Gazette 2012/19)**

(54) **SYSTÈME ET PROCÉDÉ DE DÉCOUVERTE DE VOISINAGE POUR OBJETS COMMUNICANTS**

SYSTEM UND VERFAHREN ZUM ENTDECKEN VON UMGEBUNGEN FÜR KOMMUNIZIERENDE OBJEKTE

SYSTEM AND METHOD FOR DISCOVERING SURROUNDINGS FOR COMMUNICATING OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2010 FR 1059043**

(43) Date de publication de la demande:
**11.09.2013 Bulletin 2013/37**

(73) Titulaires:
• **Institut National des Sciences Appliquées de Lyon**
  **69100 Villeurbanne (FR)**
• **INRIA - Institut National de Recherche en Informatique et en Automatique**
  **78150 Le Chesnay (FR)**
• **Ecole Normale Superieure De Lyon**
  **69007 Lyon (FR)**
• **Université Claude Bernard Lyon I**
  **69100 Villeurbanne (FR)**
• **Centre National de la Recherche Scientifique (CNRS)**
  **75016 Paris (FR)**

(72) Inventeurs:
• **FRABOULET, Antoine**
  **F-69007 Lyon (FR)**
• **FLEURY, Eric**
  **F-69005 Lyon (FR)**
• **CHELIUS, Guillaume**
  **F-69100 Villeurbanne (FR)**

(74) Mandataire: **Le Cacheux, Samuel L.R.**
**Jacobacci & Partners SAS**
**23-25, rue Jean-Jacques Rousseau**
**75001 Paris (FR)**

(56) Documents cités:
**US-A1- 2006 193 274     US-A1- 2008 031 210**

• **CLAUSEN LIX T ET AL: "Mobile Ad Hoc Network (MANET) Neighborhood Discovery Protocol (NHDP); draft-ietf-manet-nhdp-14.txt", MOBILE AD HOC NETWORK (MANET) NEIGHBORHOOD DISCOVERY PROTOCOL (NHDP); DRAFT-IETF-MANET-NHDP-14.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 14, 12 juillet 2010 (2010-07-12), pages 1-86, XP015070023,**

EP 2 636 254 B1

**Description**

La présente invention concerne le domaine technique général des protocoles asynchrones de découverte de voisinage - c'est-à-dire des objets n'ayant pas d'horloge globale en commun - pour objets communicants.

On entend, dans le cadre de la présente invention, par « objet communiquant », un objet comprenant un émetteur pour émettre un signal vers un autre objet communiquant et/ou un récepteur pour recevoir les signaux émis par un autre objet communiquant.

Dans le cas de deux objets communiquant les deux objets communiquant peuvent être mobiles ou fixes - comme par exemple un téléphone, une borne radiofréquence fixe ou tout autre terminal mobile ou fixe connu de l'homme de métier.

L'invention trouve des champs d'application dès lors que des objets communicants sont utilisés.

Dans la suite, on utilisera indifféremment les termes « noeud » et « objet » pour désigner les objets communiquant.

Présentation de l'art antérieur

La présente invention concerne la découverte de voisinage par des objets communicants : pour un objet communiquant, la découverte de voisinage consiste à découvrir l'ensemble des objets présents dans son voisinage (i.e. proximité / entourage).

La notion de voisinage est directement liée à la capacité de communication des objets. Un objet A est dit voisin de B si A peut recevoir des informations de B. Il est intéressant de noter que la relation de voisinage n'est pas nécessairement réciproque.

La découverte de voisinage pour objets communiquant peut avoir plusieurs finalités. Il peut s'agir d'un processus élémentaire nécessaire à la mise en oeuvre d'autres protocoles ou services plus complexes, comme par exemple un protocole de routage ou un protocole de découverte de services. Il peut également être l'objectif même de l'application si par exemple c'est la proximité des objets qui vise à être mesurée.

Dans tous les cas, la découverte de voisinage est une problématique largement adressée dans le domaine des réseaux de communication sans-fil simple ou multi-sauts, notamment les réseaux dit « ad hoc » (également connus sous l'acronyme « *MANET* » signifiant « *Mobile Ad-Hoc Networks* » *en anglo-saxon),* les réseaux de capteurs (également connus sous le sigle « *WSN* » signifiant « *Wireless Sensor Networks* » en anglo-saxon), ou encore les réseaux personnels (également connus sous l'acronyme « *BANET* » signifiant « *Body Area Networks* » en anglo-saxon), etc.

Dans ces domaines, la découverte de voisinage est généralement réalisée par l'envoi périodique de période $\Delta$ d'un signal - par exemple un paquet « *Hello* » - entre les objets présents sur le réseau. Plus précisément, chaque objet communiquant comprend des moyens de contrôle adaptés pour commander l'activation/la désactivation d'un émetteur et d'un récepteur de l'objet. Les moyens de contrôle de l'objet activent périodiquement l'émetteur pendant une durée d'émission $\zeta$. Durant la durée d'activation d'émission de l'émetteur, le récepteur est désactivé par les moyens de contrôle.

La période $\Delta$ est imposée par l'application et correspond à la période à laquelle les objets mobiles veulent évaluer / découvrir leur voisinage. Cette période est liée à la dynamique des apparitions et disparitions des noeuds du réseau. Par exemple, dans le cas de la détection de voisinage sur le quai d'une gare, la période $\Delta$ sera plus courte que dans le cas de la détection de voisinage dans une salle de cinéma où les personnes portant les objets communiquant restent à une même position plus longtemps.

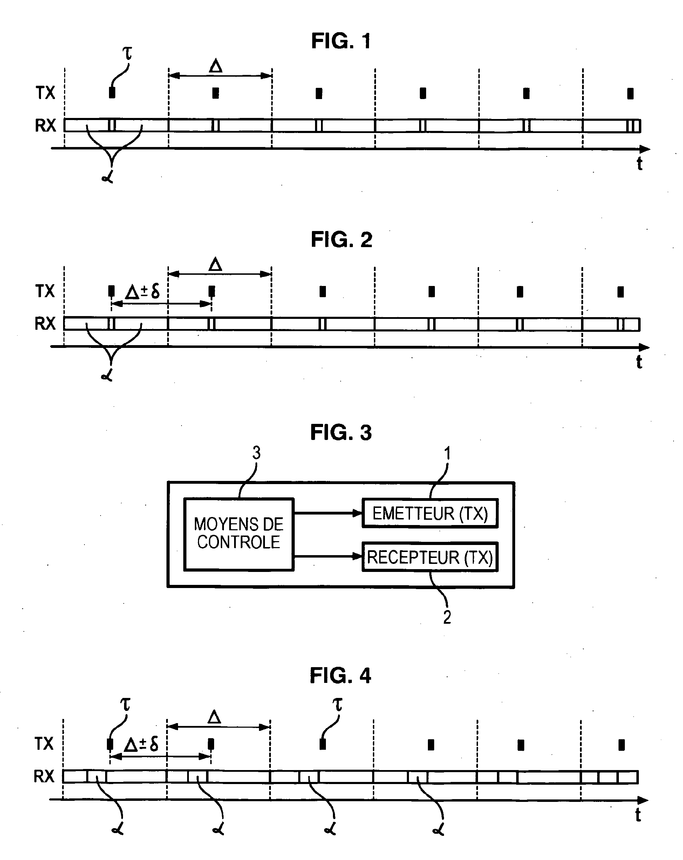

Comme illustré sur le schéma de la figure 1, avec les systèmes et procédés de l'art antérieur, lorsque l'émetteur TX d'un objet est désactivé - i.e. en dehors de la durée d'émission $\zeta$ - le récepteur RX est activé. En d'autres termes, lorsque l'objet n'est pas en émission, il est en réception sur son interface de communication.

Un objet présent sur le réseau doit donc à la fois annoncer ses informations et écouter les informations provenant de ses voisins. Ce mécanisme de découverte simple est notamment utilisé dans le cadre des protocoles de routage ad-hoc, et notamment ceux standardisés à l'IETF.

Un inconvénient de ce protocole concerne les risques de collisions qui peuvent survenir si deux objets voisins choisissent d'émettre leur information simultanément. En effet, l'émission simultanée de deux objets communicants à un même instant entraîne des collisions systématiques entre les objets et une perte des informations transmises par ces deux objets.

Afin d'éviter ces collisions, un décalage aléatoire $\delta$ (également connu sous le nom anglo-saxon de *« jitter »*) est généralement ajouté à la période d'inter-émission, comme illustré Figure 2. En d'autres termes, deux activations successives de l'émetteur par les moyens de contrôle sont espacées dans le temps d'une période plus un décalage aléatoire $\delta$.

Un inconvénient de ces protocoles illustrés aux figures 1 et 2 est qu'ils consomment beaucoup d'énergie.

Le document US2008/0021210 concerne un dispositif de lecteur multimédia portable capable de fonctionner dans un réseau sans fil, ainsi qu'un protocole pour réduire l'énergie consommée par un noeud dans le réseau sans fil.

Un but de la présente invention est de proposer un système et un procédé de découverte de voisinage permettant de limiter l'énergie consommée par les objets mobiles.

Résumé de l'invention

A cet effet, l'invention propose un système de détermination de voisinage dans un réseau sans fil, le système comprenant des premier et deuxième noeuds, chaque noeud étant programmé pour détecter périodiquement les noeuds situés dans son voisinage toutes les périodes de temps $\Delta$, remarquable en ce que

- le premier noeud comporte un émetteur et des moyens de contrôle pour activer l'émetteur pendant une durée d'émission $\zeta$ inférieure à la période de temps $\Delta$, l'émetteur émettant un signal d'identification pendant la durée d'émission $\zeta$ ;
- le deuxième noeud comporte un récepteur et des moyens de contrôle pour activer le récepteur pendant une durée de réception $\alpha$ inférieure à la différence entre la période de temps $\Delta$ et la durée d'émission $\zeta$, le récepteur écoutant les signaux provenant des noeuds voisins pendant la durée de réception $\alpha$, les moyens de contrôle du deuxième noeud activant le récepteur une seule fois par période de temps $\Delta$.

Avantageusement, les noeuds peuvent être mobiles ou fixes. Par exemple, un noeud peut être mobile et l'autre fixe, les deux noeuds peuvent être mobiles, ou les deux noeuds peuvent être fixes.

L'utilisation du système ci-dessus dans un environnement d'objets fixes garde du sens et correspond à une découverte de voisinage utilisée dans des problèmes de type "auto-configuration" (configuration automatique d'un réseau ou d'un ensemble de machines). Un exemple d'application concerne la mise en place d'un référentiel de temps commun si une machine est prise comme référence de temps. Les objets fixes peuvent également avoir un fonctionnement discontinu ou non permanent, sans pour autant bouger, entraînant la nécessité de mettre en place une mesure de voisinage dynamique pour savoir qui est présent à un moment donné dans le réseau.

Des aspects préférés mais non limitatifs du système selon l'invention sont les suivants :

- les moyens de contrôle du premier noeud sont adaptés pour activer l'émetteur plusieurs fois sur la période de temps $\Delta$, l'émetteur émettant un signal d'identification « Hello » à chaque activation ;
- la durée de réception $\alpha$ est inférieure au double de la durée d'inter-émission $2\sigma$ entre deux émissions successives de l'émetteur, et est supérieure ou égale à la somme de la durée d'émission $\zeta$ et de la durée d'inter-émission $\sigma$ entre deux émissions successives de l'émetteur sur une même période $\Delta$ ;
- la durée de réception $\alpha$ est égale à la somme de la durée d'émission $\zeta$ et de la durée entre deux émissions successives de l'émetteur sur une même période $\Delta$ ;
- le pas entre deux activations successives de l'émetteur est égal à la somme :
  - de la durée d'émission $\zeta$ ,
  - de la durée d'inter-émission $\sigma$ séparant deux états activés successifs de l'émetteur et
  - d'un décalage temporel $\delta$ inférieur à la période de temps $\Delta$. ;

- la durée du décalage temporel est aléatoire ;
- chaque noeud comprend un filtre pour ne prendre en compte qu'un seul signal d'identification par noeud voisin par période.

L'invention concerne également un procédé de détermination de voisinage dans un réseau sans fil incluant des premier et deuxième noeuds, chaque noeud étant programmé pour détecter périodiquement les noeuds situés dans son voisinage toutes les périodes de temps $\Delta$, remarquable en ce que qu'il comprend

- l'activation d'un émetteur du premier noeud pendant une durée d'émission $\zeta$ inférieure à la période de temps $\Delta$, l'émetteur émettant un signal d'identification pendant la durée d'émission $\zeta$ ;
- l'activation d'un récepteur du deuxième noeud pendant une durée de réception $\alpha$ inférieure à la période de temps $\Delta$, le récepteur écoutant les signaux provenant des noeuds voisins pendant la durée de réception $\alpha$, le récepteur étant activé une seule fois par période de temps $\Delta$.

Avantageusement, le procédé peut comprendre plusieurs étapes d'activation de l'émetteur sur une période de temps $\Delta$, l'émetteur émettant un signal d'identification à chaque activation.

L'invention concerne également un produit programme d'ordinateur comportant un code programme enregistré sur un support de données lisible par un ordinateur pour exécuter le procédé décrit ci-dessus lorsque le programme d'ordinateur est appliqué à un ordinateur pour être exécuté.

Brève description des dessins

D'autres avantages et caractéristiques ressortiront mieux de la description qui va suivre de plusieurs variantes d'exécution, données à titre d'exemples non limitatifs, à partir des dessins annexés sur lesquels :

- la figure 1 et 2 illustrent des procédés d'art antérieur relatifs à la découverte de voisinage pour objets communicants ;
- la figure 3 illustre schématiquement un exemple d'objet communiquant ;
- les figures 4 à 6 illustrent schématiquement différents exemples de procédés relatifs à la découverte de voisinage pour objet communiquant.

Description détaillée de l'invention.

En référence à la figure 3, on a illustré un exemple d'objet communicant. Cet objet communiquant comprend un émetteur 1 apte à émettre un signal, un récepteur 2 apte à recevoir le ou les signaux émis par d'autres objets communiquant et des moyens de contrôle 3 pour activer/désactiver l'émetteur 1 et le récepteur 2 de l'objet communicants.

Un but de l'invention concerne la « découverte asynchrone de voisinage pour un objet communiquant mobile induisant une faible consommation d'énergie et minimisant les interférences.

Les termes utilisés dans le paragraphe précédent sont définis ci-dessous :

- découverte de voisinage : un objet communiquant doit découvrir les objets avec lesquels il peut communiquer autour de lui ;
- asynchrone : les objets n'ont pas de référentiel temporel commun : la découverte ne peut donc pas s'appuyer sur une notion d'heure commune ;
- objet mobile : objet pouvant entrer et sortir d'un réseau (mode de fonctionnement discontinu). Le processus de découverte est donc un processus dynamique et continu dans le temps qui doit permettre la détection d'événements comme l'arrivée ou la disparition de voisins ;
- faible consommation d'énergie : les objets sont généralement contraints et autonomes d'un point de vue énergétique. Le protocole doit donc minimiser la consommation énergétique des objets ;
- minimisation des interférences : les interfaces de communication des objets sont contraintes. Le protocole doit donc chercher à minimiser l'utilisation du canal de communication et les interférences qu'il génère.

Comme mentionné ci-dessus, un inconvénient des protocoles de découverte de voisinage existant concerne la consommation d'énergie.

Ceci est dû au fait que les interfaces de communication restent en permanence en mode réception pour écouter les annonces des voisins. En effet, les interfaces radio dans leur technologie actuelle consomment la même quantité d'énergie pour écouter le support quel que soit l'activité sur celui-ci.

En référence à la figure 4, on a illustré un exemple de procédé permettant de réduire la consommation d'énergie des objets communicants.

Dans ce mode de réalisation, chaque objet communicant est programmé pour découvrir son voisinage périodiquement toutes les périodes $\Delta$. Au cours d'une période $\Delta$, les moyens de contrôle 3 activent l'émetteur 1 de l'objet une fois pendant une durée d'émission $\tau$ au cours de laquelle un signal d'identification - par exemple *« Hello »* - est envoyé à l'attention des autres objets communicants du réseau. A la fin de la durée d'émission $\tau$, les moyens de contrôle 3 désactivent l'émetteur 1. En ce qui concerne le récepteur 2 de l'objet, celui-ci est activé par les moyens de contrôle 3 durant une durée de réception $\alpha$. Avantageusement, le récepteur 2 n'est activé qu'une seule fois par période $\Delta$.

On notera que dans le cas des procédés illustrés aux figures 1 et 2, le récepteur 2 est activé en permanence lorsque l'émetteur 1 est désactivé, de sorte que la durée de réception $\alpha$ du récepteur 2 est égale la différence entre la période de temps $\Delta$ et la durée d'émission $\tau$.

Au contraire, dans le mode de réalisation illustré à la figure 4, des phases d'inactivité du récepteur 2 sont mises en place au cours de la période $\Delta$, ces phases d'inactivité incluant des instants auxquels l'émetteur 1 est inactif. Ainsi, sur une période de temps $\Delta$, la durée de réception $\alpha$ est inférieure à la différence entre la période $\Delta$ et la durée d'émission $\tau$, et préférentiellement inférieure à la moitié de la période $\Delta$.

En réduisant le temps au cours duquel le récepteur 2 est actif sur une période $\Delta$, ce mode de réalisation permet de réduire l'énergie consommée par le récepteur 2 et donc par l'objet communicant.

Comme les objets ne sont pas synchronisés, l'écart temporel entre deux activations de l'émetteur 1 et l'écart temporel entre deux activations du récepteur 2 sont généralement choisis aléatoirement. Le processus de découverte devient alors stochastique et un voisin n'est découvert que si son émission coïncide temporellement avec la période de réception du objet voisin. Ce mécanisme de découverte permet donc de réduire considérablement la consommation d'énergie au prix d'une perte significative de la précision de découverte du voisinage.

Pour améliorer la précision de découverte du voisinage tout en réduisant la consommation d'énergie, on propose un mode de réalisation dans lequel, sur une période $\Delta$, on augmente la fréquence des annonces - c'est-à-dire que les moyens de contrôle activent plusieurs fois l'émetteur sur un même période $\Delta$ - afin de maximiser la probabilité de réception de ces annonces par un voisin.

Le principe consistant à limiter le temps d'écoute de chaque objet est conservé pour optimiser la consommation énergétique.

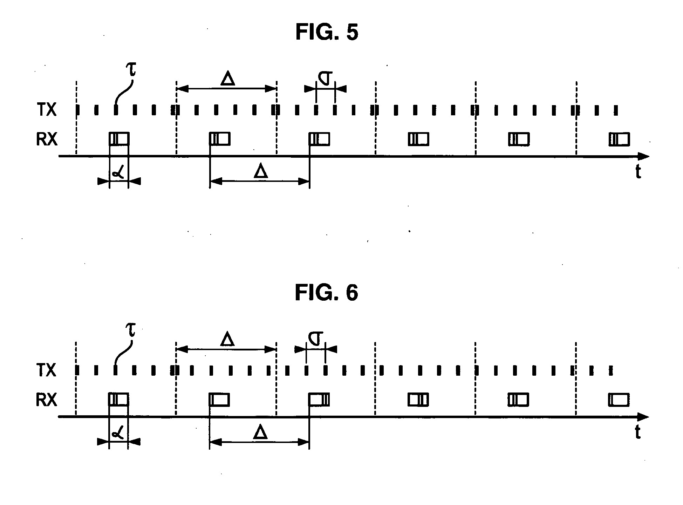

Les figures 5 et 6 illustrent les principaux paramètres mis en place pour l'invention.

Chaque objet recherche ses voisins périodiquement à la période $\Delta$. Le récepteur 2 est activé une seule fois par période $\Delta$ pendant une durée de réception $\alpha$. L'émetteur 2 est quant à lui activé une pluralité de fois par les moyens de contrôle 3 sur une même période $\Delta$. A chaque activation, l'émetteur 1 émet un signal d'identification pendant la durée d'émission $\tau$.

De préférence, la durée de réception $\alpha$ est supérieure ou égale à la somme de la durée d'émission $\tau$ et de la durée d'inter-émission $\sigma$ séparant deux états activés successifs de l'émetteur. Ceci permet de garantir que le récepteur d'un objet reçoive le message émis par l'émetteur d'un objet voisin au court d'une période. L'homme du métier aura compris que la durée d'inter-émission correspond à l'écart temporel séparant deux émissions successives par l'émetteur, c'est-à-dire à la durée durant laquelle l'émetteur est désactivé par les moyens de contrôle entre deux activations successives.

On notera que lorsque la durée de réception $\alpha$ est choisie égale à la somme de la durée d'émission $\tau$ et de la durée d'inter-émission $\sigma$, la consommation d'énergie au niveau de l'objet communiquant est minimale.

Pour minimiser sensiblement la consommation d'énergie dans l'objet communiquant tout en maximisant la probabilité de découverte d'un voisin, la durée de réception $\alpha$ est préférentiellement comprise entre le double de la durée d'inter-émission $2\sigma$, et la somme de la durée d'émission $\tau$ et de la durée d'inter-émission $\sigma$ entre deux activations successives de l'émetteur sur une même période $\Delta$ :

$$2\sigma \geq \alpha \geq \tau + \sigma .$$

La probabilité de collision et d'interférence augmente avec la densité du voisinage. Plusieurs objets peuvent essayer d'envoyer leur information simultanément.

Avantageusement, le pas entre deux activations successives de l'émetteur peut être égal à la somme :

- de la durée d'émission $\tau$
- de la durée d'inter-émission $\sigma$ séparant deux états activés successifs de l'émetteur et
- d'un décalage temporel $\delta$ (ou *« jitter »*) inférieur à la période de temps $\Delta$.

L'utilisation d'un « jitter », aléatoire et particulier à chaque objet, $\delta$ entre deux émissions permet de décaler les paquets, et donc de limiter les risques de collision et d'interférences entre les objets.

Pour éviter de détecter plusieurs fois le même objet voisin au court d'un même période de temps $\Delta$, chaque objet peut comprendre un filtre pour ne prendre en compte qu'une seule annonce d'un objet voisin par période. En effet, comme la durée de réception $\alpha$ peut être supérieure au temps inter-émission $\sigma$ des annonces, plusieurs annonces d'un même objet voisin peuvent être reçues pendant la durée de réception $\alpha$.

Dans le mode de réalisation illustré à la figure 5, l'émetteur 1 et le récepteur 2 sont synchronisés l'un par rapport à l'autre. Ainsi, les instants d'activation et de désactivation de l'émetteur et du récepteur sont identiques à chaque période $\Delta$.

Dans le mode de réalisation de la figure 6, l'émetteur et le récepteur sont désynchronisés l'un par rapport à l'autre. Les instants d'activation et de désactivation de l'émetteur varient d'une période $\Delta$ à l'autre.

Comme expliqué précédemment, l'invention repose sur un jeux de paramètres de gestion des temps d'émission et de réception des objets permettant de faire varier dans une large gamme le mode de fonctionnement du protocole de découverte de voisinage et ainsi de pouvoir mettre en place un compromis entre coût énergétique et précision de découverte adapté en fonction de l'application visée.

Les paramètres utilisés sont les suivants:

- $\Delta$ : macro-période de découverte de voisinage, cette période est liée à l'application et correspond à la période à laquelle le l'objet ou noeud mobile veut évaluer / découvrir son voisinage. Cette période est liée à la dynamicité des apparitions et disparition des objets du réseau ;

- σ période d'inter-émission de signal d'identification (paquets "Hello") correspondant au temps durant lequel l'émetteur est en mode désactivé ;

- $\zeta$ : durée d'émission du signal d'identification (i.e. d'un paquet "Hello") correspondant au temps durant lequel l'émetteur est en mode activé ;

- α : durée de réception correspondant au temps d'écoute sur le support, c'est-à-dire au temps durant lequel le récepteur est en mode activé ;

- δ : décalage permettant de désynchroniser l'émission de deux objets voisins. Ce paramètre sert à réduire les collisions systématiques.

Chaque objet dans le réseau possède sa propre horloge, les objets ne sont synchronisés ni à l'initialisation ni durant l'utilisation du système. Chaque noeud est responsable de la gestion de son temps interne. L'activité réseau d'un objet dans la phase de découverte de voisinage est partagée entre temps d'écoute et annonces d'informations. Les annonces d'information sont des paquets dont le temps d'émission est égal à une durée $\zeta$. La macro-période Δ de calcul du voisinage comporte des annonces et une période d'écoute de durée α. La durée α est de référence supérieure au temps inter-émission σ des annonces plus $\zeta$ de façon que :

$$\Delta > \alpha > \sigma \qquad (1)$$

Les paramètres liés à l'implantation du protocole de découverte de voisinage sont :

$$A = \frac{\sigma}{\alpha}, 0 < A \leq 1 \qquad (2)$$

$$B = \frac{\sigma}{\Delta}, 0 < B \leq 1 \qquad (3)$$

Où :

- A représente le rapport entre le temps inter-émission et la fenêtre d'écoute du protocole. Ce rapport sert à gérer les paramètres de densité dans le voisinage ainsi que les interférences entre les différents objets ;

- B représente le rapport entre le temps d'écoute et la macro-période. Ce rapport représente le facteur de réduction en énergie par rapport à une version où l'écoute est permanente.

Les paramètres A et B ne sont pas indépendants et sont liés par la variable σ. Ils sont ici nommés de façon explicite par soucis de clarté de la présentation. La consommation d'énergie du protocole peut-être facilement modélisée. Le temps d'activation de l'émetteur, état dans lequel la consommation est la plus significative, est donnée pour une macro-période par les relations suivantes :

$$E_{TX} = P_{TX} \times \tau \times \left\lceil \frac{\Delta}{\sigma + \tau} \right\rceil \qquad (4)$$

$$E_{RX} = P_{RX} \times (\alpha - \left\lceil \frac{\alpha}{\sigma + \tau} \right\rceil \times \tau) \qquad (5)$$

PTX et PRX sont les puissances consommées par la radio associées aux émissions et à la réception des paquets. Les applications numériques sur des matériels et des temporisations usuelles montrent que les paramètres du protocole de découverte de voisinage permettent d'optimiser et de minimiser la consommation d'énergie pour les applications.

Le protocole de découverte de voisinage décrit ci-dessus peut être implanté soit sous forme d'un automate (machine à état) temporisé avec un seul compteur de temps, soit sous forme de deux tâches (process, thread) concurrents accédant à l'émetteur et au récepteur de l'objet :

- la tâche d'écoute et de mesure du voisinage contrôlant le temps d'écoute du support est représenté par une tâche périodique de période $\Delta$ écoutant le medium pendant une durée $\alpha$ ;
- la tâche gérant les émissions est une tâche périodique de période $\sigma$+ $\zeta$ . cette tâche est prioritaire et peut envoyer un message au milieu d'une période d'écoute déclenchée par la première tâche.

Les deux tâches concurrentes dont le fonctionnement est illustré sur la Figure 6 permettent d'implanter correctement le protocole de découverte de voisinage de façon simple.

Une implantation sous forme maître - esclave peut aisément être mise en place pour gérer un mode synchronisation précis d'un système distribué. Un noeud particulier du système sert de référence temporelle, ses paquets « Hello » contenant un compteur à rebours, en temps ou en nombre de paquets, annonçant le temps restant avant la prochaine macro-période $\Delta$. Ce mode de synchronisation permet à tous les noeuds présents dans le voisinage d'être synchronisé au début de la prochaine macro-période $\Delta$. L'imprécision du système de synchronisation est uniquement liée aux variations de temps de propagation du message sur le medium radio selon les distances des noeuds en écoute par rapport au noeud maître. Ce temps est négligeable, voire non mesurable, dans les architectures mobiles actuelles.

L'homme du métier aura compris que de nombreuses modifications peuvent être apportées au procédé et système décrits ci-dessus sans sortir matériellement des nouveaux enseignements présentés ici.

Par exemple, le lecteur appréciera que le système et le procédé décrits ci-dessus ne se limitent pas à la détection de deux objets communicants, et qu'il peut être mis en oeuvre dans le cas de « n » objets communicants, n étant un entier supérieur à deux. Par ailleurs, les objets communicants peuvent communiquer en utilisant différents types de signaux. Par exemple, les signaux émis et reçus par les objets peuvent être des signaux radiofréquence, ou infrarouge ou tout autre type de signaux connus de l'homme du métier permettant la mise en oeuvre d'une communication sans fil entre les objets

Il est donc bien évident que les exemples qui viennent d'être donnés ne sont que des illustrations particulières en aucun cas limitatives.

## Revendications

1. Système de détermination de voisinage dans un réseau sans fil, le système comprenant des premier et deuxième noeuds, chaque noeud étant programmé pour détecter périodiquement les noeuds situés dans son voisinage toutes les périodes de temps $\Delta$,
   **caractérisé en ce que**

   - le premier noeud comporte un émetteur (1) et des moyens de contrôle (3) pour activer l'émetteur (1) pendant une durée d'émission $\zeta$ inférieure à la période de temps $\Delta$, l'émetteur émettant un signal d'identification pendant la durée d'émission $\zeta$ ;
   - le deuxième noeud comporte un récepteur (2) et des moyens de contrôle (3) pour activer le récepteur (2) pendant une durée de réception $\alpha$ inférieure à la différence entre la période de temps $\Delta$ et la durée d'émission $\zeta$ , le récepteur (2) écoutant les signaux provenant des noeuds voisins pendant la durée de réception $\alpha$, les moyens de contrôle (3) du deuxième noeud activant le récepteur une seule fois par période de temps $\Delta$.

2. Système selon la revendication 1, dans lequel les moyens de contrôle du premier noeud sont adaptés pour activer l'émetteur plusieurs fois sur la période de temps $\Delta$, l'émetteur émettant un signal d'identification, Hello, à chaque activation.

3. Système selon la revendication 2, dans lequel la durée de réception $\alpha$ est inférieure au double de la durée d'inter-émission $2\sigma$ entre deux émissions successives de l'émetteur, et est supérieure ou égale à la somme de la durée d'émission $\zeta$ et de la durée d'inter-émission $\sigma$ entre deux émissions successives de l'émetteur sur une même période $\Delta$.

**4.** Système selon l'une des revendications 2 ou 3, dans lequel la durée de réception $\alpha$ est égale à la somme de la durée d'émission $\zeta$ et de la durée entre deux émissions successives de l'émetteur sur une même période $\Delta$.

**5.** Système selon l'une des revendications 1 à 4, dans lequel le pas entre deux activations successives de l'émetteur est égal à la somme :
   - de la durée d'émission $\zeta$,
   - de la durée d'inter-émission $\sigma$ séparant deux états activés successifs de l'émetteur et
   - d'un décalage temporel $\delta$ inférieur à la période de temps $\Delta$.

**6.** Système selon la revendication 5, dans lequel la durée du décalage temporel est aléatoire.

**7.** Système selon l'une des revendications précédentes, dans lequel chaque noeud comprend un filtre pour ne prendre en compte qu'un seul signal d'identification par noeud voisin par période.

**8.** Procédé de détermination de voisinage dans un réseau sans fil incluant des premier et deuxième noeuds, chaque noeud étant programmé pour détecter périodiquement les noeuds situés dans son voisinage toutes les périodes de temps $\Delta$,
   **caractérisé en ce que** qu'il comprend
   - l'activation d'un émetteur du premier noeud pendant une durée d'émission $\zeta$ inférieure à la période de temps $\Delta$, l'émetteur émettant un signal d'identification pendant la durée d'émission $\zeta$ ;
   - l'activation d'un récepteur du deuxième noeud pendant une durée de réception $\alpha$ inférieure à la période de temps $\Delta$, le récepteur écoutant les signaux provenant des noeuds voisins pendant la durée de réception $\alpha$, le récepteur étant activé une seule fois par période de temps $\Delta$.

**9.** Procédé selon la revendication 8, lequel comprend plusieurs étapes d'activation de l'émetteur sur une période de temps $\Delta$, l'émetteur émettant un signal d'identification à chaque activation.

**10.** Produit programme d'ordinateur comportant un code programme enregistré sur un support de données lisible par un ordinateur pour exécuter le procédé selon l'une des revendications 8 ou 9 lorsque le programme d'ordinateur est appliqué à un ordinateur pour être exécuté.

**Patentansprüche**

**1.** System zum Bestimmen der Umgebung in einem drahtlosen Netz, wobei das System einen ersten und einen zweiten Knoten umfasst, wobei jeder Knoten programmiert ist, um periodisch in allen Zeitperioden $\Delta$ die Knoten, die sich in seiner Umgebung befinden, zu detektieren,
   **dadurch gekennzeichnet, dass**

   - der erste Knoten einen Sender (1) und Steuermittel (3), um den Sender (1) während einer Sendedauer $\zeta$, die kürzer als die Zeitperiode $\Delta$ ist, zu aktivieren, umfasst, wobei der Sender während der Sendedauer $\zeta$ ein Iden-tifizierungssignal sendet; und
   - der zweite Knoten einen Empfänger (2) und Steuermittel (3), um den Empfänger (2) während einer Empfangs-dauer $\alpha$, die kürzer als die Differenz zwischen der Zeitperiode $\Delta$ und der Sendedauer $\zeta$ ist, zu aktivieren, umfasst, wobei der Empfänger (2) die Signale, die von benachbarten Knoten während der Empfangsdauer $\alpha$ ankommen, überwacht und wobei die Steuermittel (3) des zweiten Knotens den Empfänger einmal pro Zeitperiode $\Delta$ akti-vieren.

**2.** System nach Anspruch 1, wobei die Steuermittel des ersten Knotens dafür ausgelegt sind, den Sender mehrmals in der Zeitperiode $\Delta$ zu aktivieren, wobei der Sender bei jeder Aktivierung ein Identifizierungssignal, Hello, aussendet.

**3.** System nach Anspruch 2, wobei die Empfangsdauer $\alpha$ kürzer als die doppelte Sendezwischendauer $2\sigma$ zwischen zwei aufeinanderfolgenden Sendevorgängen des Senders und länger als oder ebenso lang wie die Summe aus der Sendedauer $\zeta$ und der Sendezwischendauer $\sigma$ zwischen zwei aufeinanderfolgenden Sendevorgängen in der-selben Periode $\Delta$ ist.

**4.** System nach einem der Ansprüche 2 oder 3, wobei die Empfangsdauer $\alpha$ ebenso lang wie die Summe aus der

Sendedauer $\zeta$ und der Dauer zwischen zwei aufeinanderfolgenden Sendevorgängen in derselben Periode $\Delta$ ist.

5. System nach einem der Ansprüche 1 bis 4, wobei die Schrittweite zwischen zwei aufeinanderfolgenden Aktivierungen des Senders gleich der Summe ist aus:

- der Sendedauer $\zeta$,
- der Sendezwischendauer $\sigma$, die zwei aufeinanderfolgende aktivierte Zustände des Senders trennt, und
- einer Zeitverzögerung $\delta$, die kleiner als die Zeitperiode $\Delta$ ist.

6. System nach Anspruch 5, wobei die Dauer der Zeitverzögerung zufällig ist.

7. System nach einem der vorhergehenden Ansprüche, wobei jeder Knoten ein Filter umfasst, um nur ein einziges Identifizierungssignal pro benachbartem Knoten pro Periode zu berücksichtigen.

8. Verfahren zum Bestimmen der Umgebung in einem drahtlosen Netz, das einen ersten und einen zweiten Knoten umfasst, wobei jeder Knoten programmiert ist, um die Knoten, die sich in seiner Umgebung befinden, in allen Zeitperioden $\Delta$ periodisch zu detektieren,
**dadurch gekennzeichnet, dass** es umfasst:

- Aktivieren eines Senders des ersten Knotens während einer Sendedauer $\zeta$, die kleiner als die Zeitperiode $\Delta$ ist, wobei der Sender während der Sendedauer $\zeta$ ein Identifizierungssignal aussendet; und
- Aktivieren eines Empfängers des zweiten Knotens während einer Empfangsdauer $\alpha$, die kleiner als die Zeitperiode $\Delta$ ist, wobei der Empfänger die Signale, die von benachbarten Knoten während der Empfangsdauer $\alpha$ ankommen, überwacht, wobei der Empfänger einmal pro Zeitperiode $\Delta$ aktiviert wird.

9. Verfahren nach Anspruch 8, das mehrere Schritte des Aktivierens des Senders in einer Zeitperiode $\Delta$ umfasst, wobei der Sender bei jeder Aktivierung ein Identifizierungssignal aussendet.

10. Computerprogrammprodukt, das Programmcode enthält, der auf einem von einem Computer lesbaren Datenträger aufgezeichnet ist, um das Verfahren nach einem der Ansprüche 8 oder 9 auszuführen, wenn das Computerprogramm in einen Computer eingegeben wird, um ausgeführt zu werden.

**Claims**

1. A system for determining the surroundings in a wireless network, the system comprising first and second nodes, each node being programmed for periodically detecting the nodes located in its surroundings every time period $\Delta$, **characterized in that**

- the first node includes a transmitter (1) and control means (3) for activating the transmitter (1) for a transmission time $\tau$, less than the time period $\Delta$, the transmitter transmitting an identification signal during the transmission time $\tau$;
- the second node includes a receiver (2) and control means (3) for activating the receiver (2) for a receiving period $\alpha$ less than the interval between the time period $\Delta$ and the transmission time $\tau$, the receiver (2) listening to the signals from neighboring nodes during the receiving period $\alpha$, the control means (3) of the second node activating the receiver only once per time period $\Delta$.

2. The system according to claim 1, wherein the control means of the first node are adapted for activating the transmitter several times over the time period $\Delta$, the transmitter transmitting an identification signal, Hello, at each activation.

3. The system according to claim 2, wherein the receiving period $\alpha$ is less than twice the inter-transmission period $2\sigma$ between two successive transmissions of the transmitter and is greater than or equal to the sum of the transmission period $\tau$ and of the inter-transmission period $\sigma$ between two successive transmissions of the transmitter over a same period $\Delta$.

4. The system according to one of claims 2 or 3, wherein the receiving period $\sigma$ is equal to the sum of the transmission period $\tau$ and of the period between two successive transmissions of the transmitter over a same period $\Delta$.

5. The system according to one of claims 1 to 4, wherein the step between two successive activations of the transmitter is equal to the sum:

- of the transmission period $\tau$,
- of the inter-transmission period $\sigma$ separating two successive activated states of the transmitter and
- of a time shift $\delta$ less than the time period $\Delta$.

6. The system according to claim 5, wherein the time shift duration is random.

7. The system according to one of the preceding claims wherein each node comprises a filter in order to only take into account a single identification signal per neighboring node per period.

8. A method for determining the surroundings in a wireless network including first and second nodes, each node being programmed for periodically detecting the nodes located in its surroundings every time period $\Delta$, **characterized in that** it comprises

- the activation of a transmitter of the first node during a transmission period $\tau$ less than the time period $\Delta$, the transmitter transmitting a notification signal during the transmission period $\tau$,
- the activation of a receiver of the second node for a receiving period $\alpha$ less than the time period $\Delta$, the receiver listening to the signals from the neighboring nodes during the receiving period $\alpha$, the receiver being activated only once per time period $\Delta$.

9. The method according to claim 8, which comprises several steps for activating the transmitter over a period of time $\Delta$, the transmitter transmitting an identification signal at each activation.

10. A computer program product including a program code recorded on a computer-legible data medium for executing the method according to one of claims 8 or 9, when the computer program is applied to a computer in order to be executed.

# FIG. 1

# FIG. 2

# FIG. 3

MOYENS DE CONTROLE

EMETTEUR (TX)

RECEPTEUR (TX)

# FIG. 4

## FIG. 5

## FIG. 6

**EP 2 636 254 B1**

## RÉFÉRENCES CITÉES DANS LA DESCRIPTION

**Documents brevets cités dans la description**

- US 20080021210 A